# EUROPEAN PATENT SPECIFICATION

(11) **EP 2 795 385 B1**
(45) Date of publication and mention of the grant of the patent: **05.09.2018**
(21) Application number: 12799146.1
(22) Date of filing: 06.12.2012
(51) Int. Cl.: G02B 6/44, H02G 3/06

(54) **OVERHEAD CABLE TERMINATION ARRANGEMENT**
KLEMMENANORDNUNG FÜR EIN FREILEITUNGSKABEL
AGENCEMENT D'EXTRÉMITÉ DE CÂBLE SUSPENDU

(30) Priority: 22.12.2011 US 201161579396 P; 14.09.2012 US 201261701321 P
(43) Date of publication of application: 29.10.2014
(73) Proprietor: CommScope Connectivity Belgium BVBA, 3010 Kessel-Lo (BE); CommScope Connectivity UK Limited, Dorcan Swindon SN3 5HH (GB)
(72) Inventor: WAITE, Alastair J., Pontypool Gwent NP4 8RR (GB); THIJS, Danny,Ghislain, 3520 Zonhoven (BE)
(74) Representative: Patentanwälte Bressel und Partner mbB
(86) International application number: PCT/EP2012/074612
(87) International publication number: WO 2013/092232

(56) References cited:
- GB-A- 2 467 443
- US-A- 5 142 606
- US-A- 5 724 467
- US-A1- 2005 041 947
- US-A1- 2005 233 647
- US-A1- 2007 196 071
- US-A1- 2008 237 408
- US-A1- 2010 006 317
- US-A1- 2010 086 273
- US-A1- 2011 074 117
- US-A1- 2011 116 758

## Description

### Technical Field

This disclosure relates to a telecommunications apparatus mounted to an overhead cable management system above a rack.

### Background of the Invention

In the telecommunications industry, effective management and organization of cables and associate cable termination components is necessary in light of the massive cabling schematics involved in providing telecommunication services.

Telecommunication facilities, such as data centers or central offices, for example, often have rows of equipment racks and/or equipment cabinets interconnected to cables routed overhead. The cabling schematics of such facilities involve dropping cables down from overhead troughs or ladders, for example, and terminating the cables to termination panels mounted on the racks or in the cabinets.

Space to accommodate the increasing demand for telecommunication services is limited. Improvements are needed in the methods and devices for managing and organizing the systems, cabling schematics, and components associated with providing telecommunication services.

The US 2010/0006317 A1 teaches a telecommunications system including a frame to which telecommunications equipment is mounted. Fiber cables exiting the equipment are routed upward along each of the right and left sides of the frame. The fiber cables routed along the right and left sides merge within a horizontal through section of a cable exit assembly. The cable exit assembly is located adjacent to the top of the frame and defines a single common exit point at which the merged fiber cables exit the frame.

The US 2011/0116758 A1 teaches a system including an overhead cable pathway structure and an adapter panel or cable termination device that mounts overhead to the cable pathway structure. The cable termination device including a plurality of adapters and a cable pathway exit having a curved surface that guides cables exiting from the overhead cable pathway structure to the adapters.

### Summary of the Invention

The technical problem is to provide an improved telecommunications apparatus.

The technical problem is solved by a telecommunications apparatus with the features of claim 1. Embodiments are described in the dependent claims.

### Brief Descrintion of the Drawings

FIG. 1 is a perspective view of one embodiment of a cable management system including a lateral cable trough and a cable exit trough;
FIG. 2 is a side view of the system of FIG. 1;
FIG. 3 is an exploded view of the system of FIG. 1;
FIG. 4 is a front view of a telecommunications system including multiple embodiments of a cable termination device mounted to a cable trough in accordance with the principles disclosed;
FIG. 5 is a bottom perspective view of a cable exit trough including a cable termination device;
FIG. 6 is a side view of the device of FIG. 5;
FIG. 7 is a further side view of the device of FIG. 5;
FIG. 8 is an exploded perspective view of the device of FIG. 5;
FIG. 9 is an exploded view of the cable termination device; FIG. 9A shows a threaded fastener in greater detail;
FIG. 10 is an alternative embodiment of a cable termination device mounted to a cable exit trough;
FIG. 11 is an exploded perspective view of the alternative embodiment of the cable termination device mounted to a cable exit trough shown in FIG. 10;
FIG. 12 is a top perspective view of the cable termination device of FIG. 5 mounted to a different lateral trough element;
FIG. 13 is an exploded perspective view of the device of FIG. 12;
FIG. 14 is a perspective view of the cable termination device of FIG. 10, shown mounted to an end of a lateral trough;
FIG. 15 is an exploded perspective view of the device shown in FIG. 14.

### Detailed Descrintion

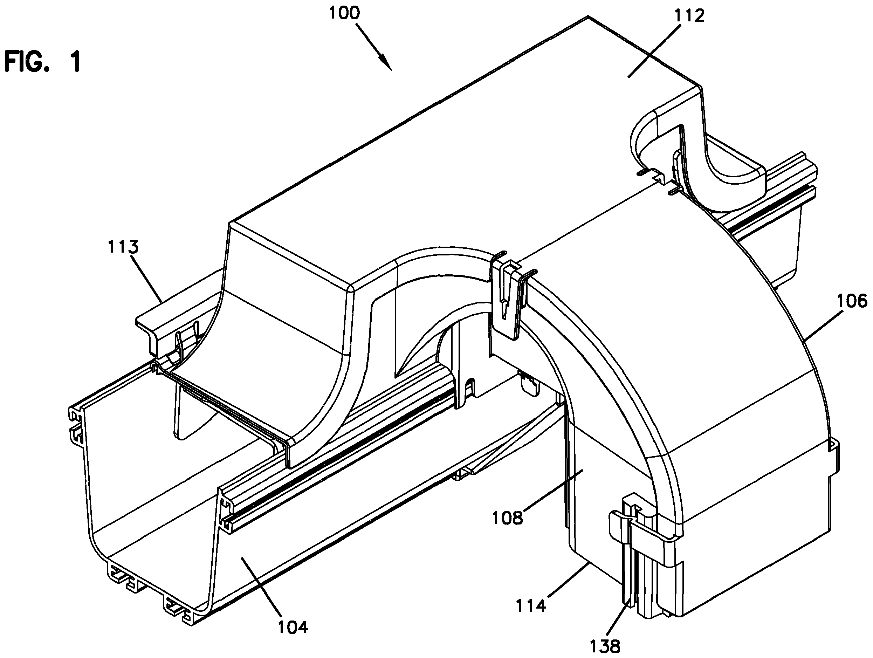

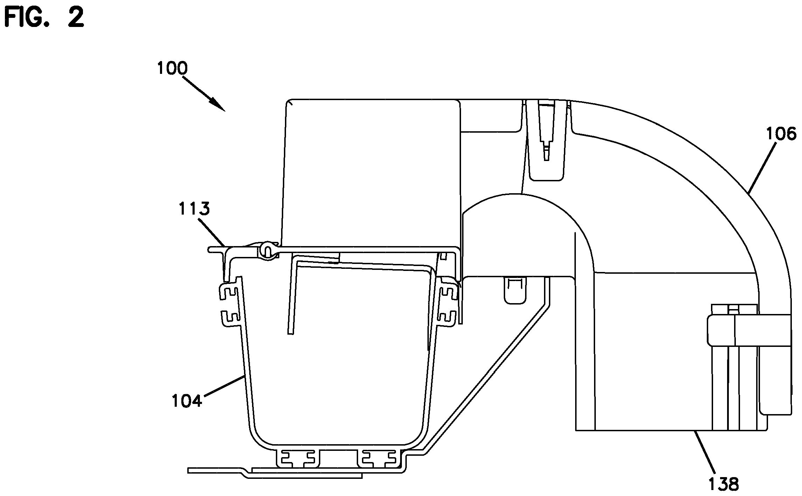

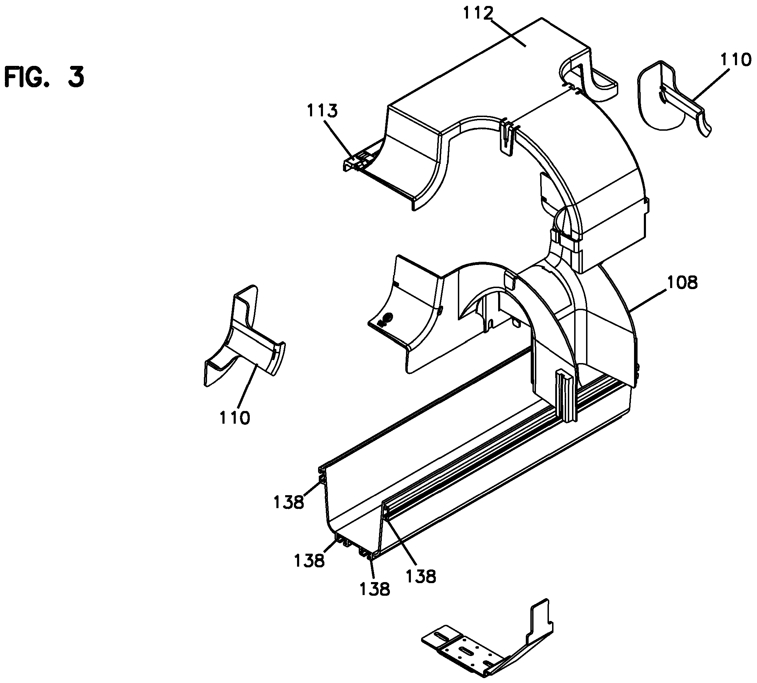

FIGS. 1-4 illustrates one embodiment of an overhead cable management system 100 which includes a lateral trough 104 and a cable exit trough 106. The overhead cable management system 100 is designed to manage and organize cables and related components to increase capacity in limited telecommunication facility space. The overhead cable management system 100 of the present disclosure includes a cable termination device or apparatus 10 that mounts to an overhead cable pathway structure of the cable management system 100.

Cable exit trough 106 includes a main body 108, flanges 110, and a cover 112. A pivoting cover portion 113 allows for access to cable trough 104. Downspout portion 114 includes slots 138. Lateral trough 104 also includes slots 138. More details of cable exit troughs are shown in U.S. Patent No. 6,535,683. Cable exit troughs 106 allow cables to exit cable trough or lateral trough 104.

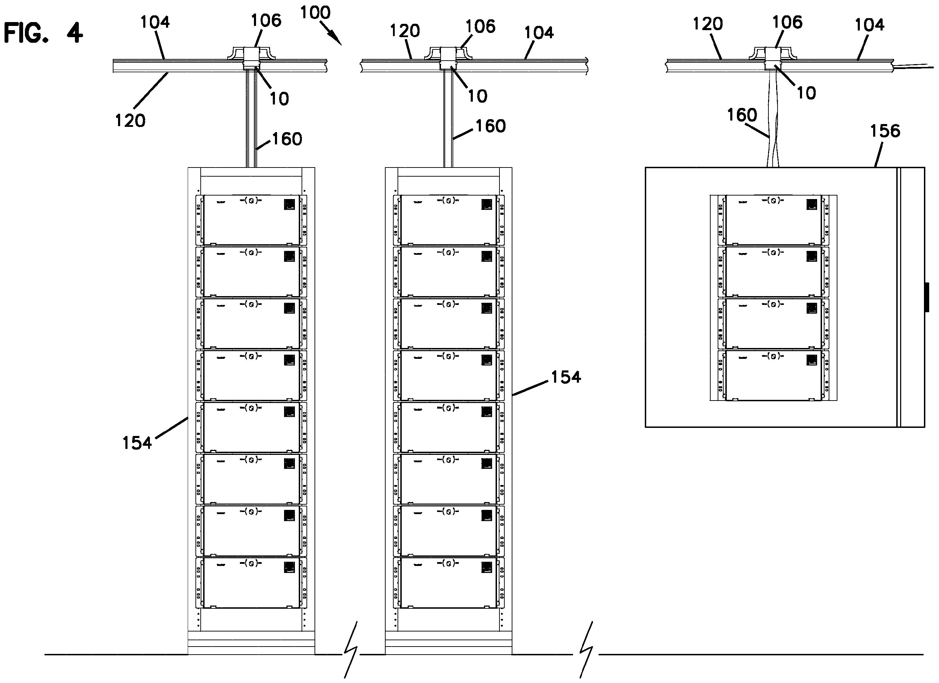

Referring to FIG. 4, in telecommunication facilities, such as data centers or central offices, for example, overhead cable pathway structures 120 are hung above racks 154, cabinets 156, and/or other equipment enclosures or framework. The overhead cable pathway structures 120 carry cables that interconnect to equipment mounted to on the racks, for example. For the purposes of simplification, the remaining description refers to the structure in which the equipment mounts as a "rack"; however it is to be understood that the present disclosure applies similarly to the other equipment structures (e.g., cabinets, and other enclosures or framework). The "overhead" cable pathway structures are typically run "overhead", as racks commonly have a height equivalent or greater than the height of a technician. It is to be understood that "overhead" is not intended to be limiting to the height of the technician, but rather means that the cable pathway structures are located a distance from the floor, typically overhead, the more commonly above the structures to which the equipment is mounted (e.g. the rack or cabinet). In the illustrated embodiment FIG. 4, the overhead cable pathway structure includes a U-shaped channel or through 104. In other embodiments, the overhead cable pathway structure can be a ladder-type structure. Other types of structures that carry cables overhead to and from racks or cabinets can be used in accordance with the principals disclosed.

In utilizing the space above equipment racks for the run of cables, it can be understood that the cable pathway structure provides a generally horizontal run for the cables. That is, the cable pathway structures are constructed such that the cables run more horizontally, rather than vertically, when carried by the cable pathway structure.

In conventional arrangements, cables carried by the overhead cable pathway structures are pulled down from the overhead structure and terminated to a termination panel mounted on the equipment racks. Termination panels are panels to which overhead cables are terminated and generally include a number of adapters or connectors. Jumper cables or patch cords are used to provide interconnections between facility arrangements hold both the equipment and the termination panel to which the cables terminate, the termination panel occupying at least one of the limited number of unit spaces of the rack.

Referring still to FIG. 4, the overhead cable management system 100 of the present disclosure provides improvements upon spatial utilization of racks and facilities. That is, the overhead cable management system increases service capacity of a facility by providing cable terminations at a location other than the rack. Cable terminations are instead provided in unoccupied space above the racks at apparatus 10, with cables 160 extending downwardly from terminations associated with apparatus 10. Valuable rack space can thereby be allocated for more equipment, as opposed to being constrained by the requirement of a termination panel on racks 154 or in cabinets 156.

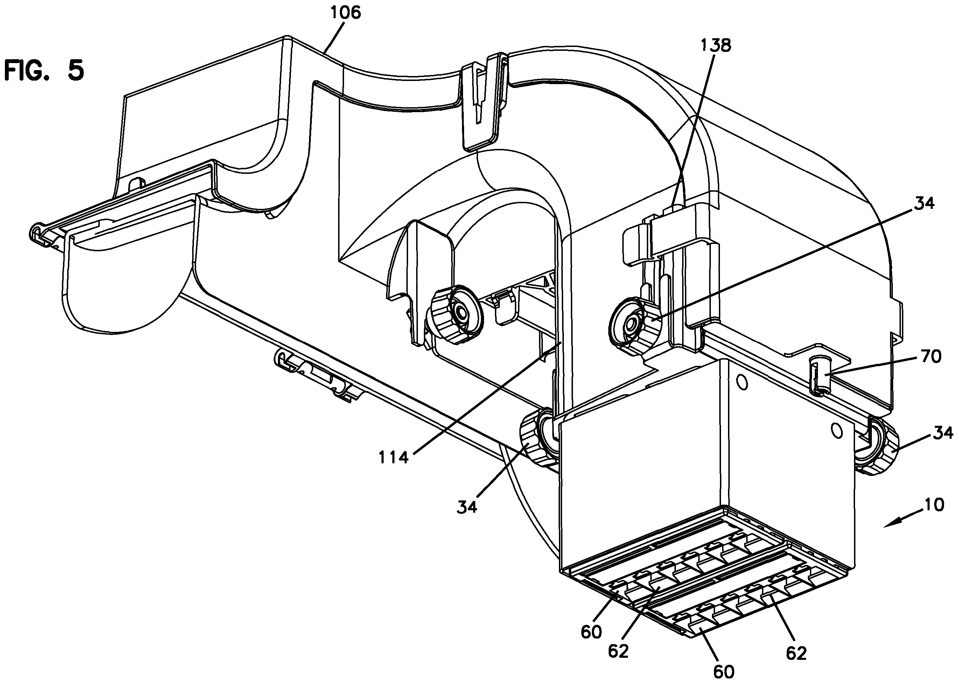

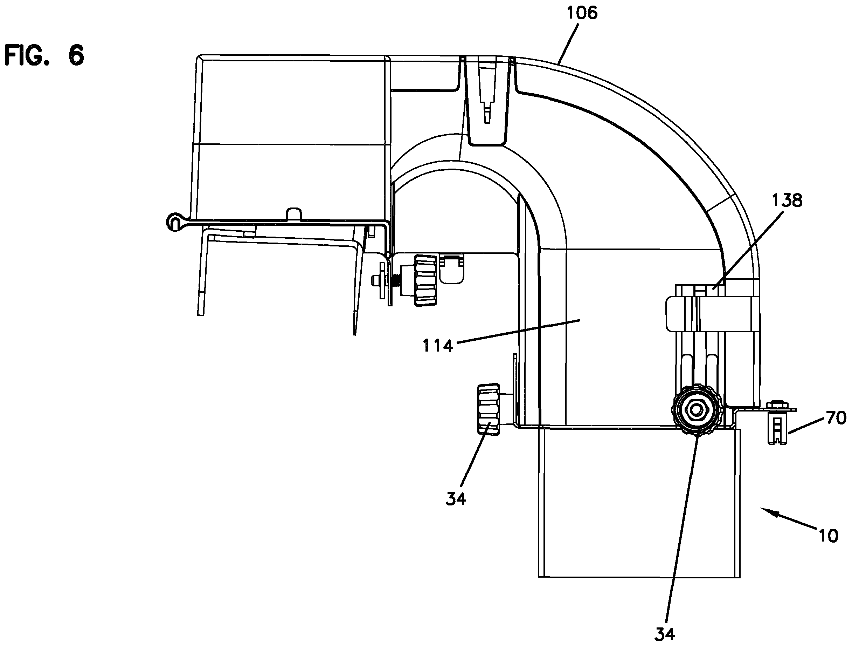

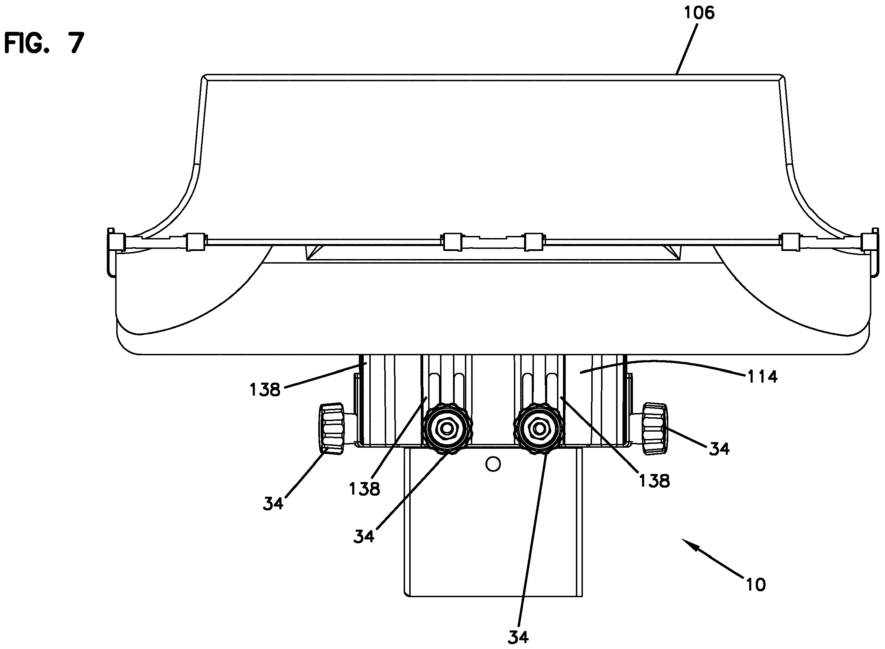

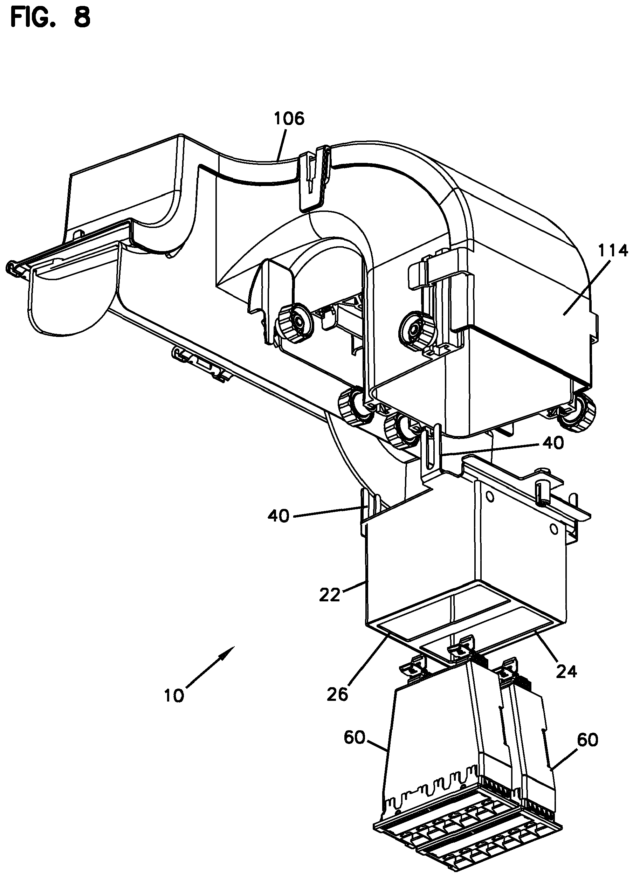

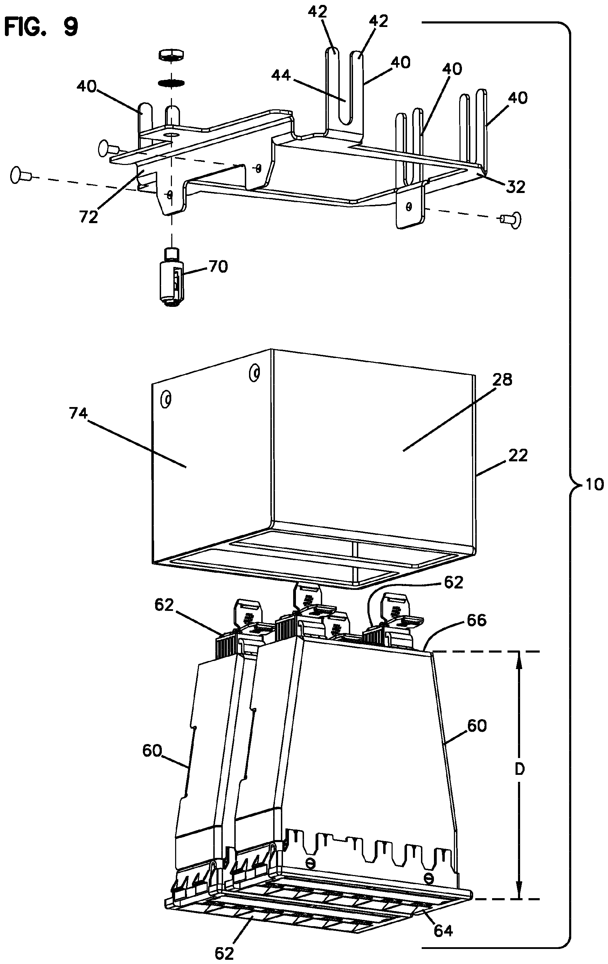

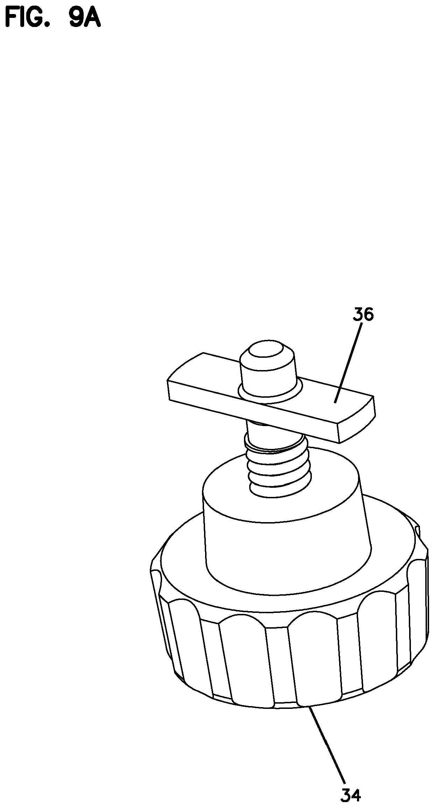

Referring to FIGS. 5-9 and 9A, the cable termination apparatus 10 includes a frame 20 including a main body 22 defining at least one opening 24. In the illustrated embodiment, main body 22 includes a second opening 26. Each opening 24, 26 receives a telecommunications connection module 60. Each connection module 60 includes one or more connection locations 62 on the front and the rear for connecting to cables. The front and rear connections can be copper, fiber, hybrid, or other. The connections can be the same or different, such as MPO on the rear, and single fiber on the front, or IDCs on the rear and RJ-45s on the front, in much the same way as rack mounted patch panels or modules. The modules/connections can be fiber adapter holders or RJ jack holders, for example. The modules 60 snap mount to frame 20.

Frame 20 of cable termination apparatus 10 includes extensions 40 which each include a pair of prongs 42 with a slot 44 defined there between. Threaded fasteners 34 thread into winged retaining pieces 36. The winged retaining pieces 36 are sized to fit within a slot 138 of exit trough 106 so as to mount prongs 42 of extensions 40 to exit trough 106. Prongs 42 mount outside of slots 138 in alignment with slots 38.

Each module 60 includes connection locations 62 on a front 64 and a back 66. A depth dimension D is created by module 60 for housing internal components and cabling. Main body 22 of frame 20 includes side walls 28 which define an interior for receiving module 60. A framework 32 mounts to side walls 28, and defines the prongs 42. Frame 20 includes a grounding lug 70 in order to provide a grounding location if desired. Referring back to FIG. 4, the overhead cable management system 100 includes cabling in the lateral troughs 104 extending into exit troughs 106 to modules 60 in the cable termination apparatus 10. Cables 160 mounted to the front 64 of modules 60 extend downward to racks 154 or cabinets 156. Cables 160 can be copper, fiber, hybrid, or other. Similarly, the cables in the lateral trough 104 extending to modules 60 can be copper, fiber, hybrid or other.

Referring back to FIG. 9, apparatus 10 is shown in exploded view. Frame 20 includes a first frame portion 72 and a second frame portion 74 fastened together which cooperate to define main body 22.

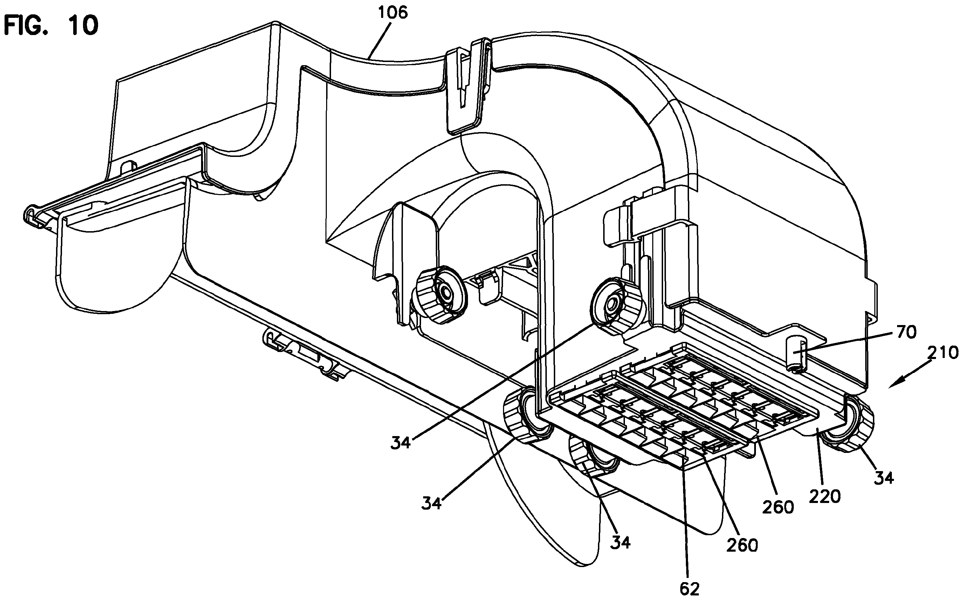

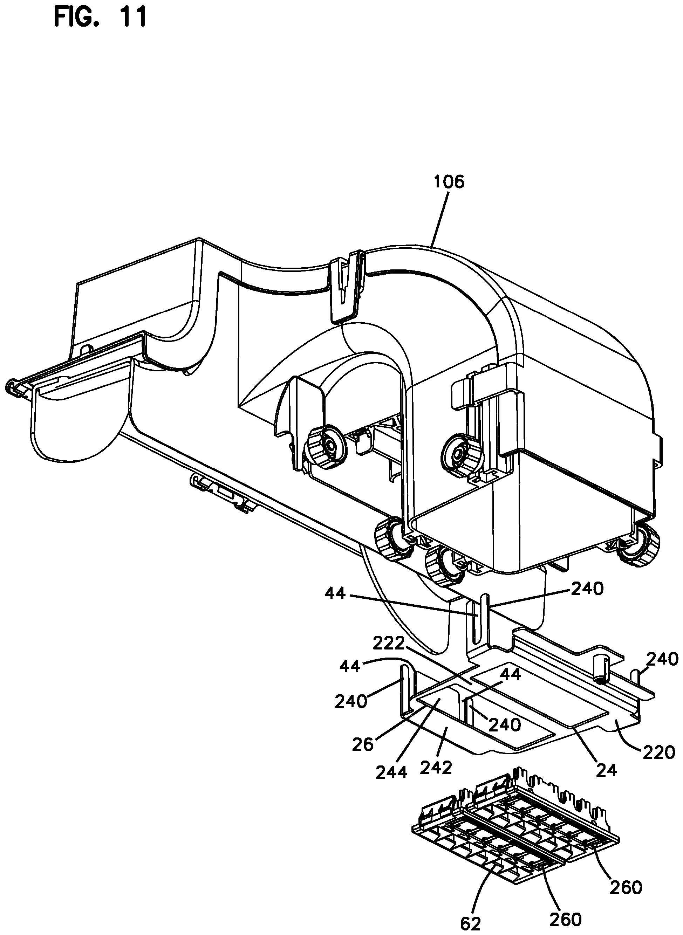

Referring now to FIGS. 10 and 11, an alternative cable termination apparatus 210 is shown. Cable termination apparatus 210 includes a frame 220 with a main body 222 having a plate shape with rear extensions 240 and a rear plate 244 extending directly from the plate portion 242. Modules 260 are in the form of RJ jack holders which snap fit into openings 24, 26.

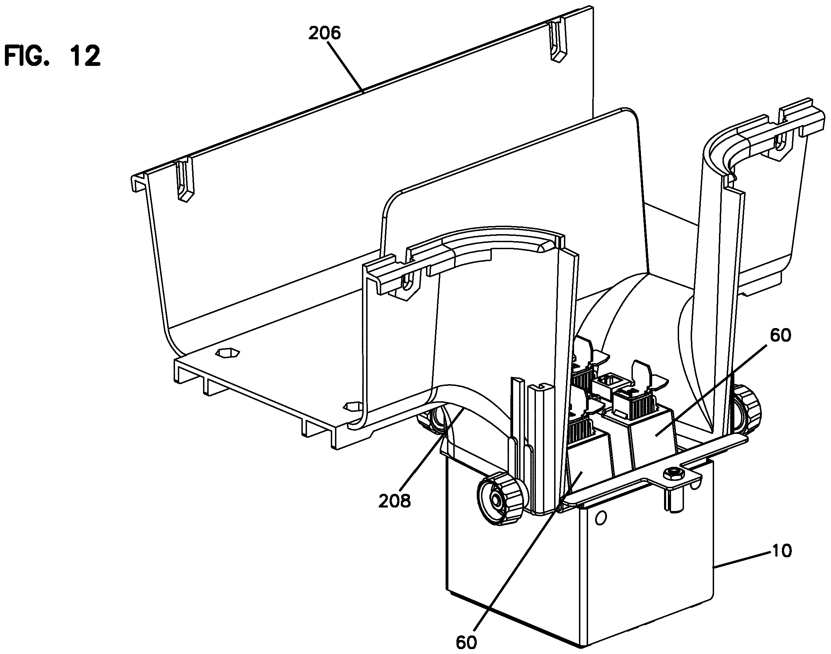

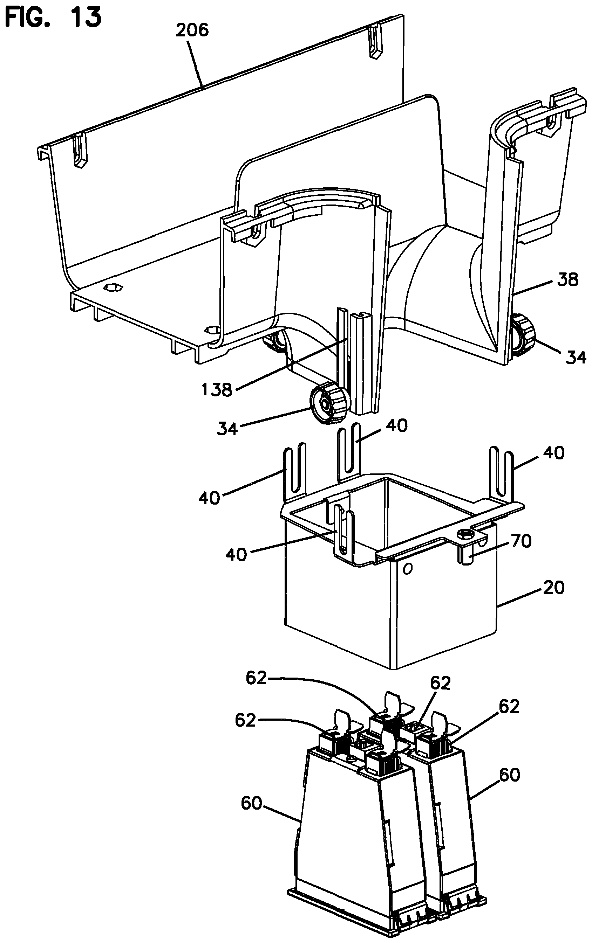

Referring now to FIGS. 12 and 13, cable termination apparatus 10 is shown mounted to an alternative lateral trough element 206 including a downspout portion 208.

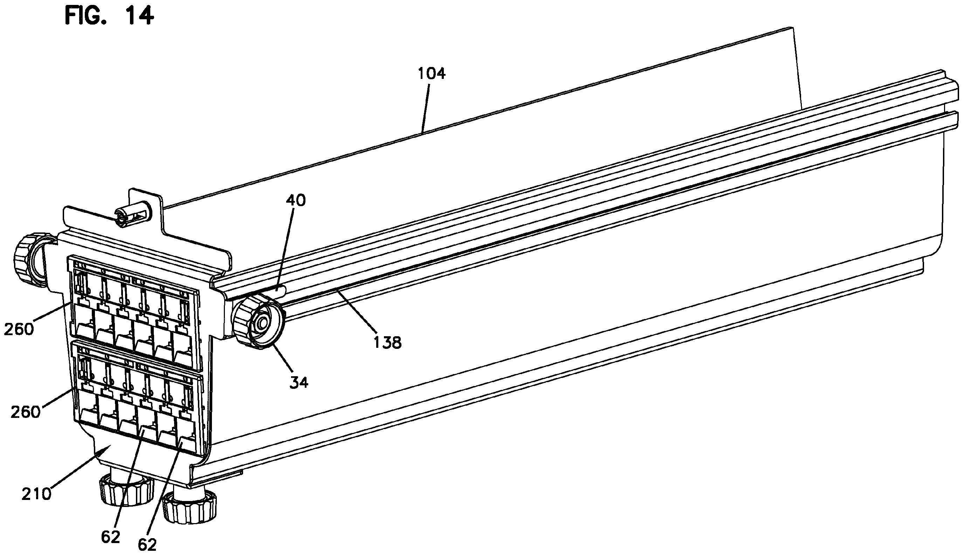

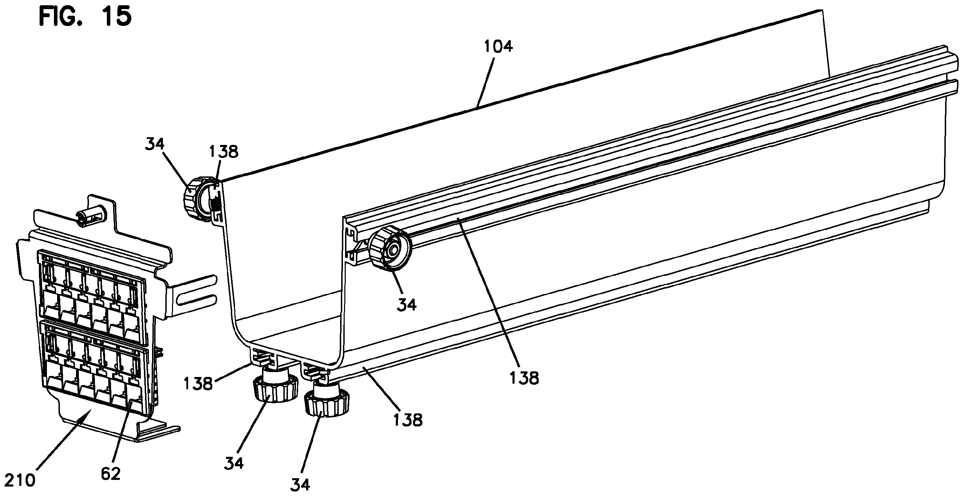

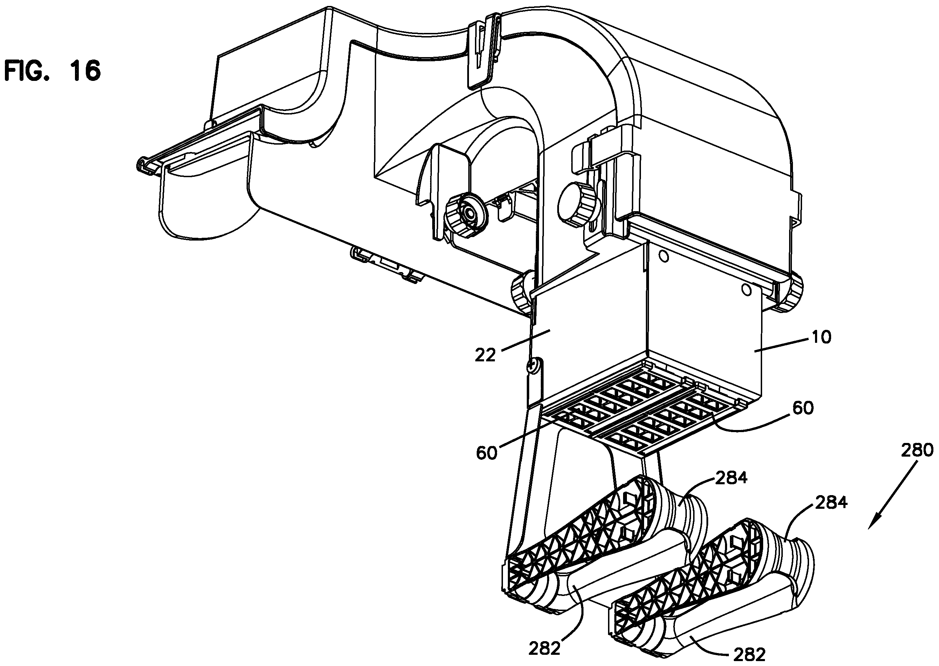

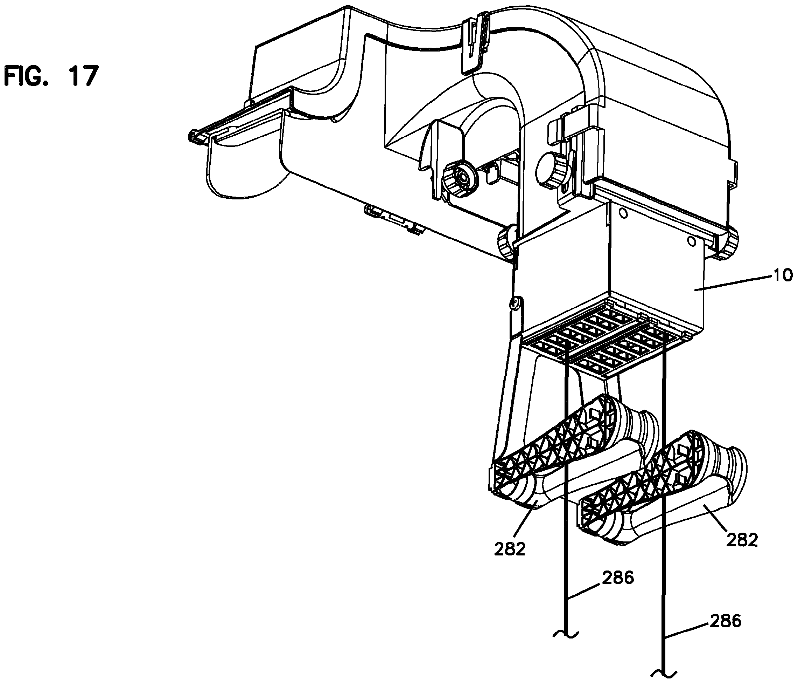

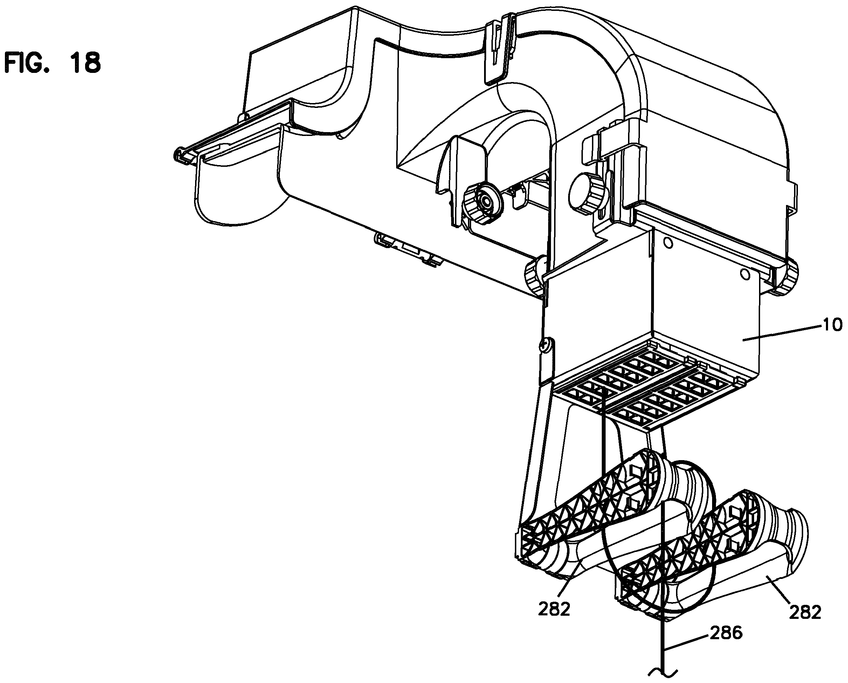

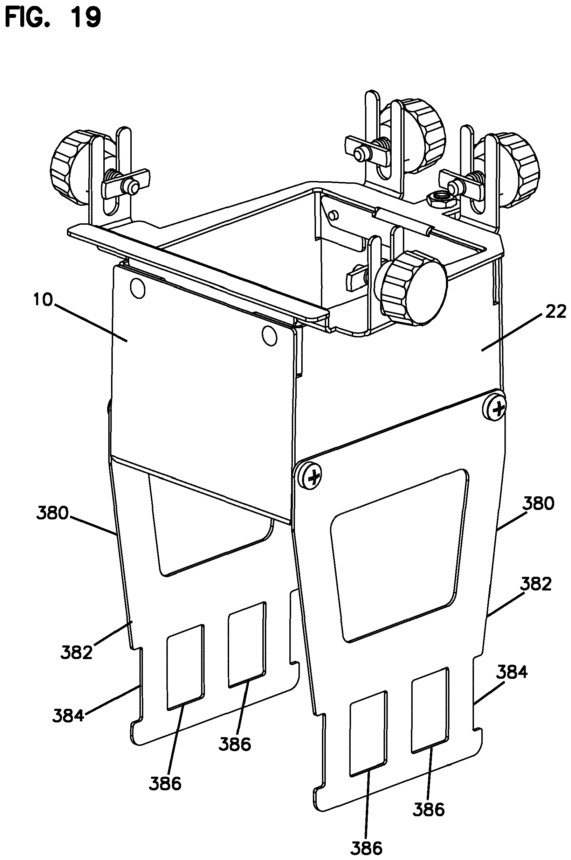

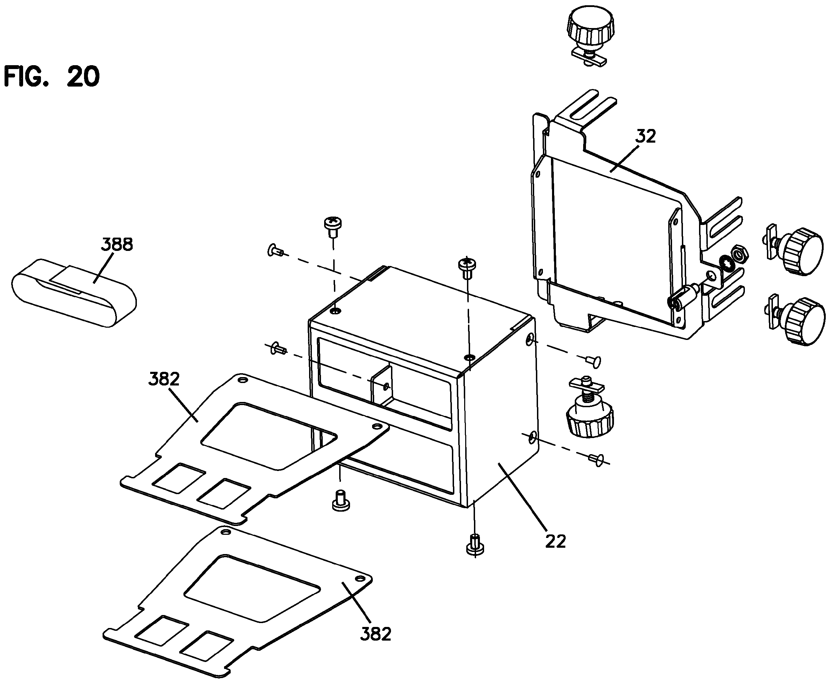

Referring now to FIGS. 14 and 15, cable termination apparatus 210 is shown mounted to an end of lateral trough 104.

The overhead pathway structures 120 of the present disclosure minimize the amount of rack space needed in a data center, central office, or other telecommunications facility. Alternatively, the devices allow for expansion and/or upgrade of systems and facilities having spatial constraints and can be added without having to add racks or cabinets. The devices are also easily incorporated and mounted to the various trough devices 104, 106, 206 shown with a quick connect coupling in the form of threaded fasteners 34. The present cable management system 100 does not increase costs by requiring replacement or upgrading of existing racks or existing overhead structures.

In addition, the present devices do not interfere with cooling pathways of existing systems. For example, in conventional methods, expanding the capacity of cabinets often requires the installation of additional termination panels within the cabinets. The added panels can block airflow needed to cool the electrical components inside the cabinet. Because the added panels or devices of the present system are mounted overhead, the panels or devices do not obstruct the airflow passages through the cabinet.

### Parts List

- 10: Cable termination apparatus
- 20: Frame
- 22: Main body
- 24: Opening
- 26: Opening
- 28: Side walls
- 32: Framework
- 34: Threaded fasteners
- 36: Winged retaining pieces
- 40: Extensions
- 42: Prongs
- 44: Slot
- 60: Module
- 62: Connection locations
- 64: Front
- 66: Back
- 70: Grounding lug
- 72: First body portion
- 74: Second body portion
- 100: Cable management system
- 104: Lateral trough
- 106: Exit trough
- 108: Main body
- 110: Flanges
- 112: Cover
- 114: Downspout portion
- 120: Overhead pathway cable structures
- 138: Slots
- 154: Racks
- 156: Cabinets
- 160: Cables
- 206: Alternative lateral trough element
- 208: Downspout portion
- 210: Cable termination apparatus
- 220: Frame
- 222: Main body
- 240: Extensions
- 242: Plate portion
- 244: Rear plate
- 260: Module

## Claims

1. A telecommunications apparatus (10, 210) mounted to an overhead cable management system (100) above a rack, the overhead cable management system having cable troughs (104, 106, 206) which includes a lateral trough (104) and a cable exit trough (106), the telecommunications apparatus (10, 210) comprising:
a frame (20, 220) mounted to one of the cable troughs (104, 106, 206), the frame including:
a main body (22, 222) defining an opening (24, 26);
a plurality of extensions (40, 240) extending transversely to the main body (22, 222), each extension (40, 240) including a pair of parallel prongs (42) separated by a slot (44), wherein the extensions (40, 240) are positioned on three sides of main body (22, 222); and
a telecommunications connection module (60, 260) mounted to the main body (22, 222) within the opening (24, 26) so that cable terminations are provided in unoccupied space above the rack, each telecommunications connection module (60) including one or more connection locations (62) on a front and a rear for connecting to cables.

2. The apparatus of claim 1, further comprising:
a U-shaped fiber optic trough element (104, 106, 206), wherein the trough element includes external slots (138), and further comprising fasteners (34) which mount the extensions (40, 240) to the slots (44), wherein the extensions (40, 240) extend parallel to the slots (44).

3. The apparatus of claims 1-2, wherein the frame (20, 220) includes a grounding lug (70).

4. The apparatus of claims 1-3, wherein four extensions (40, 240) are provided.

5. The apparatus of claims 1-4, wherein connections at the connection locations (62) can be copper.

6. The apparatus of claims 1-4, wherein connections at the connection locations (62) can be fiber.

7. The apparatus of claim 6, wherein the connections on the front and on the rear are different, for example, an MPO on the rear and a single fiber on the front.

8. The apparatus of claims 1-4, wherein connections at the connection locations (62) can be hybrid.

9. The apparatus of claims 1-8, wherein the telecommunications module (60, 260) snap mounts to the frame (20, 220).

10. The apparatus of claims 1-9, wherein the main body (22) of the frame (20) includes side walls (28) which define an interior for receiving the telecommunications module (60).

11. The apparatus of claims 1-9, wherein the main body (222) of the frame (220) has a plate shape with extensions (240) and a rear plate (244) extending directly from a plate portion (242).

12. The apparatus of claims 1-11, wherein the cable troughs include slots (138); and wherein the prongs (42) mount outside of the slots (138).

13. The apparatus of claim 12, wherein the cable trough is a cable exit trough, and wherein threaded fasteners (34) thread into winged retaining pieces (36) sized to fit within the slot (138) of the cable exit trough (106, 206) to mount the prongs (42) of the extension (40) to the cable exit trough (106, 206).

## Patentansprüche

1. Telekommunikationsvorrichtung (10, 210), befestigt an einem Freileitungskabelmanagementsystem (100) über einem Gestell, wobei das Freileitungskabelmanagementsystem Kabelrinnen (104, 106, 206) aufweist, welche eine laterale Rinne (104) und eine Kabelausgangsrinne (106) einschließen, die Telekommunikationsvorrichtung (10, 210) umfassend:
einen Rahmen (20, 220), befestigt an einer der Kabelrinnen (104, 106, 206), der Rahmen umfassend:
einen Hauptteil (22, 222), der eine Öffnung (24, 26) definiert;
mehrere Erweiterungen (40, 240), die sich transversal in den Hauptteil (22, 222) erstrecken, wobei jede Erweiterung (40, 240) ein Paar paralleler Zinken (42) einschließt, die durch einen Schlitz (44) getrennt sind, wobei die Erweiterungen (40, 240) an drei Seiten des Hauptteils (22, 222) angeordnet sind; und
ein Telekommunikationsverbindungsmodul (60, 260), befestigt am Hauptteil (22, 222) innerhalb der Öffnung (24, 26), so dass Kabelabschlüsse in nicht belegtem Raum über dem Gestell bereitgestellt sind, wobei jedes Telekommunikationsverbindungsmodul (60) eine oder mehrere Verbindungsstellen (62) an einer Vorderseite und einer Hinterseite zum Anschließen an Kabel einschließt.

2. Vorrichtung nach Anspruch 1, ferner umfassend:
ein U-förmiges Lichtwellenleiterrinnenelement (104, 106, 206), wobei das Rinnenelement externe Schlitze (138) einschließt, und ferner umfassend Befestigungselemente (34), welche die Erweiterungen (40, 240) an den Schlitzen (44) befestigen, wobei die Erweiterungen (40, 240) sich parallel zu den Schlitzen (44) erstrecken.

3. Vorrichtung nach den Ansprüchen 1-2, wobei der Rahmen (20, 220) eine Erdungslasche (70) einschließt.

4. Vorrichtung nach den Ansprüchen 1-3, wobei vier Erweiterungen (40, 240) bereitgestellt sind.

5. Vorrichtung nach den Ansprüchen 1-4, wobei Verbindungen an den Verbindungsstellen (62) Kupfer sein können.

6. Vorrichtung nach den Ansprüchen 1-4, wobei Verbindungen an den Verbindungsstellen (62) Wellenleiter sein können.

7. Vorrichtung nach Anspruch 6, wobei die Verbindungen an der Vorderseite und an der Rückseite unterschiedlich sind, zum Beispiel ein MPO an der Rückseite und ein einzelner Wellenleiter an der Vorderseite.

8. Vorrichtung nach den Ansprüchen 1-4, wobei Verbindungen an den Verbindungsstellen (62) hybrid sein können.

9. Vorrichtung nach den Ansprüchen 1-8, wobei das Telekommunikationsmodul (60, 260) am Rahmen (20, 220) einrastet.

10. Vorrichtung nach den Ansprüchen 1-9, wobei der Hauptteil (22) des Rahmens (20) Seitenwände (28) einschließt, welche ein Inneres zum Aufnehmen des Telekommunikationsmoduls (60) definieren.

11. Vorrichtung nach den Ansprüchen 1-9, wobei der Hauptteil (222) des Rahmens (220) eine Plattenform mit Erweiterungen (240) und eine hintere Platte (244) aufweist, die sich direkt aus einem Plattenteil (242) erstreckt.

12. Vorrichtung nach den Ansprüchen 1-11, wobei die Kabelrinnen Schlitze (138) einschließen; und wobei die Zinken (42) außerhalb der Schlitze (138) befestigen.

13. Vorrichtung nach Anspruch 12, wobei die Kabelrinne eine Kabelausgangsrinne ist, und wobei Befestigungselemente mit Gewinde (34) in geflügelte Halteteile (36) eingreifen, die dimensioniert sind, um in den Schlitz (138) der Kabelausgangsrinne (106, 206) zu passen, um die Zinken (42) der Erweiterung (40) an der Kabelausgangsrinne (106, 206) zu befestigen.

## Revendications

1. Appareil de télécommunications (10, 210) monté sur un système de gestion de câble suspendu (100) au-dessus d'un bâti, le système de gestion de câble suspendu présentant des chemins de câble (104, 106, 206) qui comprennent un chemin latéral (104) et un chemin de sortie de câble (106), l'appareil de télécommunications (10, 210) comprenant:
un cadre (20, 220) monté sur un des chemins de câble (104, 106, 206), le cadre comprenant:
un corps principal (22, 222) qui définit une ouverture (24, 26);
une pluralité d'extensions (40, 240) qui s'étendent transversalement au corps principal (22, 222), chaque extension (40, 240) comportant une paire de griffes parallèles (42) séparées par une fente (44), dans lequel les extensions (40, 240) sont positionnées sur trois côtés du corps principal (22, 222); et
un module de connexion de télécommunications (60, 260) monté sur le corps principal (22, 222) à l'intérieur de l'ouverture (24, 26) de telle sorte que des extrémités de câble soient prévues dans un espace inoccupé au-dessus du bâti, chaque module de connexion de télécommunications (60) comprenant un ou plusieurs point(s) de connexion (62) à l'avant et à l'arrière à connecter à des câbles.

2. Appareil selon la revendication 1, comprenant en outre un élément de chemin de fibre optique en forme de U (104, 106, 206), dans lequel l'élément de chemin comporte des fentes externes (138), et comprenant en outre des éléments de fixation (34) pour monter les extensions (40, 240) sur les fentes (44), dans lequel les extensions (40, 240) s'étendent parallèlement aux fentes (44).

3. Appareil selon les revendications 1 à 2, dans lequel le cadre (20, 220) comprend une patte de mise à la terre (70).

4. Appareil selon les revendications 1 à 3, dans lequel quatre extensions (40, 240) sont prévues.

5. Appareil selon les revendications 1 à 4, dans lequel les connexions aux points de connexion (62) peuvent être en cuivre.

6. Appareil selon les revendications 1 à 4, dans lequel les connexions aux points de connexion (62) peuvent être de la fibre.

7. Appareil selon la revendication 6, dans lequel les connexions à l'avant et à l'arrière sont différentes, par exemple, un MPO à l'arrière et une fibre simple à l'avant.

8. Appareil selon les revendications 1 à 4, dans lequel les connexions aux points de connexion (62) peuvent être hybrides.

9. Appareil selon les revendications 1 à 8, dans lequel le module de télécommunications (60, 260) est monté par encliquetage sur le cadre (20, 220)

10. Appareil selon les revendications 1 à 9, dans lequel le corps principal (22) du cadre (20) comprend des parois latérales (28) qui définissent un espace intérieur destiné à recevoir le module de télécommunications (60).

11. Appareil selon les revendications 1 à 9, dans lequel le corps principal (222) du cadre (220) présente une forme de plaque pourvue d'extensions (240) et une plaque arrière (244) qui s'étend directement à partir d'une partie de plaque (242).

12. Appareil selon les revendications 1 à 11, dans lequel les chemins de câble comportent des fentes (138); et dans lequel les griffes (42) se montent à l'extérieur des fentes (138).

13. Appareil selon la revendication 12, dans lequel le chemin de câble est un chemin de sortie de câble, et dans lequel des éléments de fixation filetés (34) se vissent dans des pièces de retenue ailées (36) dimensionnées de manière à s'agencer à l'intérieur de la fente (138) du chemin de sortie de câble (106, 206) afin de monter les griffes (42) de l'extension (40) sur le chemin de sortie de câble (106, 206).
